# EUROPEAN PATENT APPLICATION

(11) **EP 4 764 631 A1**
(43) Date of publication of application: **24.06.2026**
(21) Application number: 25214652.7
(22) Date of filing: 10.11.2025
(51) Int. Cl.: G02B 6/12, G02B 6/136, B82Y 10/00

(54) **METHOD OF MANUFACTURING QUANTUM DEVICE**

(30) Priority: 20.12.2024 JP 2024225320
(71) Applicant: FUJITSU LIMITED, Kawasaki-shi, Kanagawa 211-8588 (JP)
(72) Inventor: MIYATAKE, Tetsuya, Kawasaki-shi, 211-8588 (JP)
(74) Representative: Haseltine Lake Kempner LLP

(57) **Abstract**

A method of manufacturing a quantum device (100, 200) includes bonding a diamond substrate (30) including a color center (21) to a layer (32) provided on a support substrate (10), forming a first portion (40) including the color center, and a second portion (42) having an inclined surface (43) inclined with respect to a side wall (41) of the first portion by etching the diamond substrate after the bonding the diamond substrate, forming a metal film (45) on the inclined surface, and forming a first optical waveguide portion (20) by cutting the first portion at a first position farther from the layer than the color center by emitting a laser beam reflected by the metal film onto the side wall of the first portion.

## Description

### FIELD

A certain aspect of the present embodiments relates to a method of manufacturing a quantum device.

### BACKGROUND

There has been proposed a diamond spin type quantum computer that uses, as a quantum bit, an electron spin of a color center that is a composite defect of an impurity atom and a vacancy in a diamond single crystal (for example, International Publication Pamphlet No. WO 2022/118366). Further, it is known to emit a laser beam onto an object to cut it (for example, Japanese Patent Application Publication No. 2005-14241, and U.S. Patent No. 5767480). It is also known that a laser beam is emitted onto a wide-bandgap semiconductor substrate whereby an optical device is formed in a region where the laser beam is emitted (for example, U.S. Patent Application Publication No. 2012/0064655).

### SUMMARY

In order to form an optical waveguide portion made of diamond including a color center, a diamond substrate including the color center is thinned to a desired thickness. Here, it is conceivable to cut the diamond substrate to have the desired thickness by emitting the laser beam onto the side wall of the diamond substrate. However, in this case, it may be difficult to form an optical waveguide portion having a desired shape.

In one aspect, an object of the present disclosure is to form an optical waveguide portion having a desired shape.

According to an aspect of the present disclosure, there is provided a method of manufacturing a quantum device, including: bonding a diamond substrate including a color center to a layer provided on a support substrate; forming a first portion including the color center, and a second portion having an inclined surface inclined with respect to a side wall of the first portion by etching the diamond substrate after the bonding the diamond substrate; forming a metal film on the inclined surface; and forming a first optical waveguide portion by cutting the first portion at a first position farther from the layer than the color center by emitting a laser beam reflected by the metal film onto the side wall of the first portion.

### BRIEF DESCRIPTION OF THE DRAWINGS

FIG. 1A is a plan view of a quantum device in accordance with a first embodiment, and FIG. 1B is a cross-sectional view taken along a line A-A in FIG. 1A.
FIGs. 2A to 2C are diagrams illustrating a method of manufacturing the quantum device in accordance with the first embodiment (Part 1).
FIGs. 3A and 3B are diagrams illustrating the method of manufacturing the quantum device according to the first embodiment (Part 2).
FIGs. 4A and 4B are diagrams illustrating the method of manufacturing the quantum device according to the first embodiment (Part 3).
FIGs. 5A and 5B are diagrams illustrating the method of manufacturing the quantum device according to the first embodiment (Part 4).
FIGs. 6A and 6B are diagrams illustrating the method of manufacturing the quantum device according to the first embodiment (Part 5).
FIGs. 7A and 7B are diagrams illustrating the method of manufacturing the quantum device according to the first embodiment (Part 6).
FIGs. 8A and 8B are diagrams illustrating the method of manufacturing the quantum device according to the first embodiment (Part 7).
FIGs. 9A and 9B are diagrams illustrating the method of manufacturing the quantum device according to the first embodiment (Part 8).
FIGs. 10A and 10B are diagrams illustrating the method of manufacturing the quantum device according to the first embodiment (Part 9).
FIGs. 11A and 11B are diagrams illustrating the method of manufacturing the quantum device according to the first embodiment (Part 10).
FIGs. 12A and 12B are diagrams illustrating the method of manufacturing the quantum device according to the first embodiment (Part 11).
FIGs. 13A and 13B are diagrams illustrating the method of manufacturing the quantum device according to the first embodiment (Part 12).
FIGs. 14A and 14B are cross-sectional views of a diamond substrate in the case of cutting the diamond substrate using a YAG laser beam.
FIGs. 15A and 15B are cross-sectional views of the diamond substrate in the case of cutting the diamond substrate using a femtosecond laser beam.
FIG. 16 is a diagram illustrating an example of a processing apparatus in the case of cutting the diamond substrate using the femtosecond laser beam.
FIG. 17 is a diagram illustrating an example of the processing apparatus in the first embodiment,
FIGs. 18A to 18C are cross-sectional views illustrating emission of a laser beam onto a metal film in the first embodiment.
FIGs. 19A to 19D are cross-sectional views illustrating cutting of first portions in a first variation of the first embodiment.
FIGs. 20A to 20C are cross-sectional views of the first portion and a second portion in a second variation of the first embodiment.
FIG. 21A is a plan view of a quantum device in accordance with a second embodiment, and FIG. 21B is a cross-sectional view taken along a line A-A in FIG. 21A.
FIGs. 22A and 22B are cross-sectional views illustrating a method of manufacturing a quantum device in accordance with a second embodiment (Part 1).
FIGs. 23A and 23B are cross-sectional views illustrating the method of manufacturing the quantum device in accordance with the second embodiment (Part 2).

### EFFECT

According to one aspect, it is possible to form an optical waveguide portion having a desired shape.

### DESCRIPTION OF EMBODIMENTS

Hereinafter, embodiments of the present invention will be described with reference to the drawings.

### [First Embodiment]

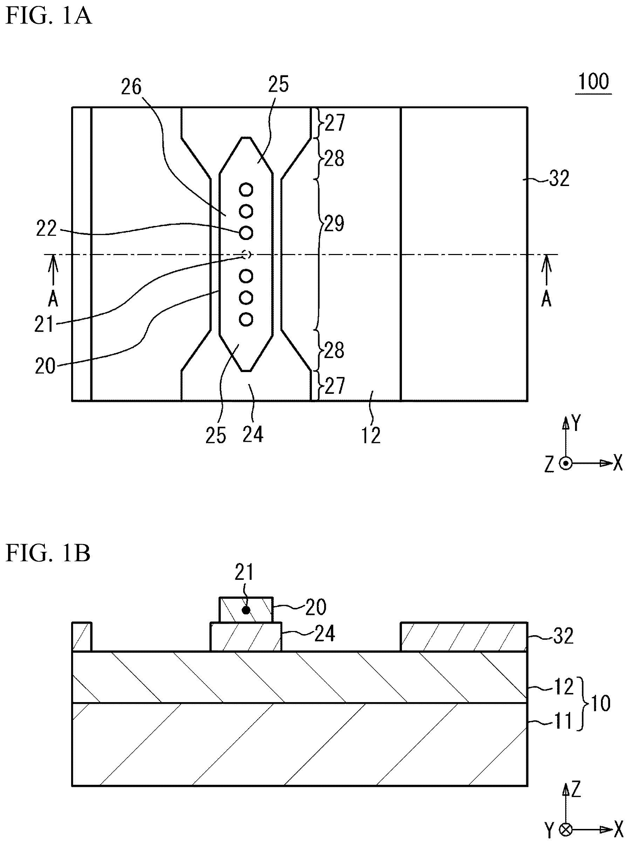

FIG. 1A is a plan view of a quantum device 100 in accordance with a first embodiment, and FIG. 1B is a cross-sectional view taken along a line A-A in FIG. 1A. Directions parallel to an upper surface of a support substrate 10 and orthogonal to each other are defined as an X-axis direction and a Y-axis direction. A direction orthogonal to the X-axis direction and the Y-axis direction is defined as a Z-axis direction. As illustrated in FIGs. 1A and 1B, in the quantum device 100, a sapphire layer 32 is provided on the support substrate 10, and a second optical waveguide portion 24 is formed by the sapphire layer 32. The second optical waveguide portion 24 extends in the Y-axis direction. The support substrate 10 is, for example, a silicon substrate with an oxide film, and includes a silicon substrate 11 and a silicon oxide film 12 provided on the silicon substrate 11.

A first optical waveguide portion 20 made of diamond is provided on the second optical waveguide portion 24. The first optical waveguide portion 20 includes a color center 21 and a plurality of through holes 22 arranged in the Y-axis direction with the color center 21 interposed therebetween. The first optical waveguide portion 20 is a photonic crystal optical waveguide portion in which the refractive index repeatedly changes in the Y-axis direction by providing the plurality of through holes 22. The color center 21 is, for example, an SnV center which is a complex defect of tin (Sn) substituted for carbon and a vacancy (V) adjacent to tin (Sn). A material having a refractive index lower than that of diamond may be embedded in the through hole 22.

The first optical waveguide portion 20 has a tapered shape in which the width in the X-axis direction of tip portions 25 in a +Y direction and a -Y direction gradually decreases. The width of a central portion 26 between the tip portions 25 in the X-axis direction is substantially constant. The second optical waveguide portion 24 has a large width in the X-axis direction of portions 27 that do not overlap the first optical waveguide portion 20. The width of portions 28 in the X-axis direction overlapping the tip portions 25 of the first optical waveguide portion 20 gradually decreases toward a portion 29 overlapping the central portion 26, and the width of the portion 29 in the X-axis direction is the smallest.

When an optical pulse is introduced into the second optical waveguide portion 24 from, for example, the - Y direction, the optical pulse is transmitted through the second optical waveguide portion 24 and the first optical waveguide portion 20 and enters the color center 21. The color center 21 emits a photon pulse of a single photon by the introduction of the optical pulse. The photon pulse is transmitted through the first optical waveguide portion 20 and the second optical waveguide portion 24 toward the +Y direction. The tip portion 25 of the first optical waveguide portion 20 and the portion 28 of the second optical waveguide portion 24 overlapping the tip portion 25 of the first optical waveguide portion 20 have different shapes. That is, the width of the tip portion 25 of the first optical waveguide portion 20 gradually increases (decreases) from the -Y direction toward the +Y direction, whereas the width of the portion 28 of the second optical waveguide portion 24 gradually decreases (increases) from the -Y direction toward the +Y direction. This allows the optical pulse and the photon pulse to be transmitted between the first optical waveguide portion 20 and the second optical waveguide portion 24.

### [Manufacturing Method]

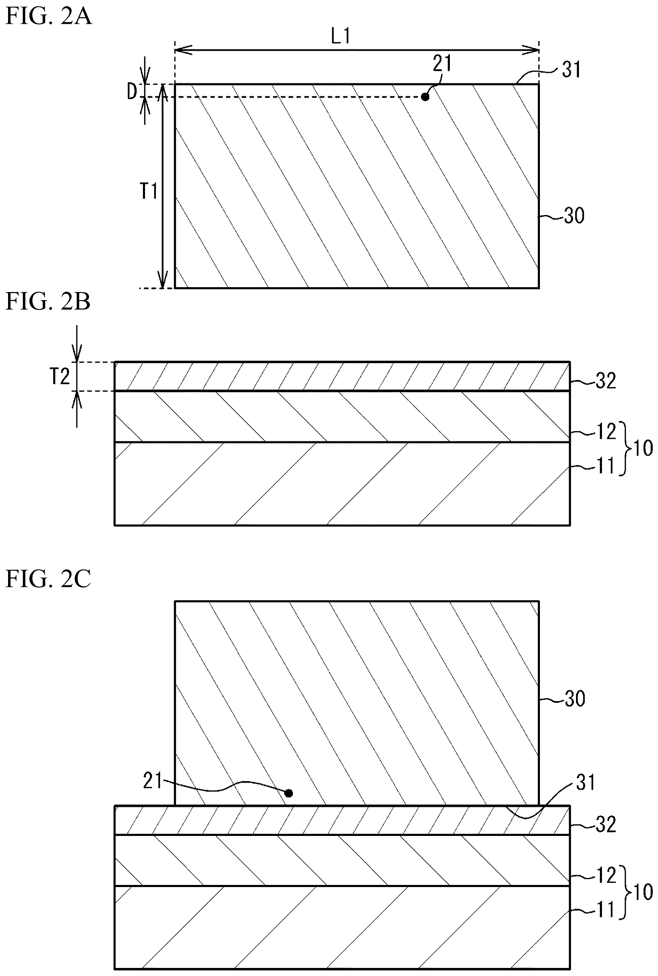

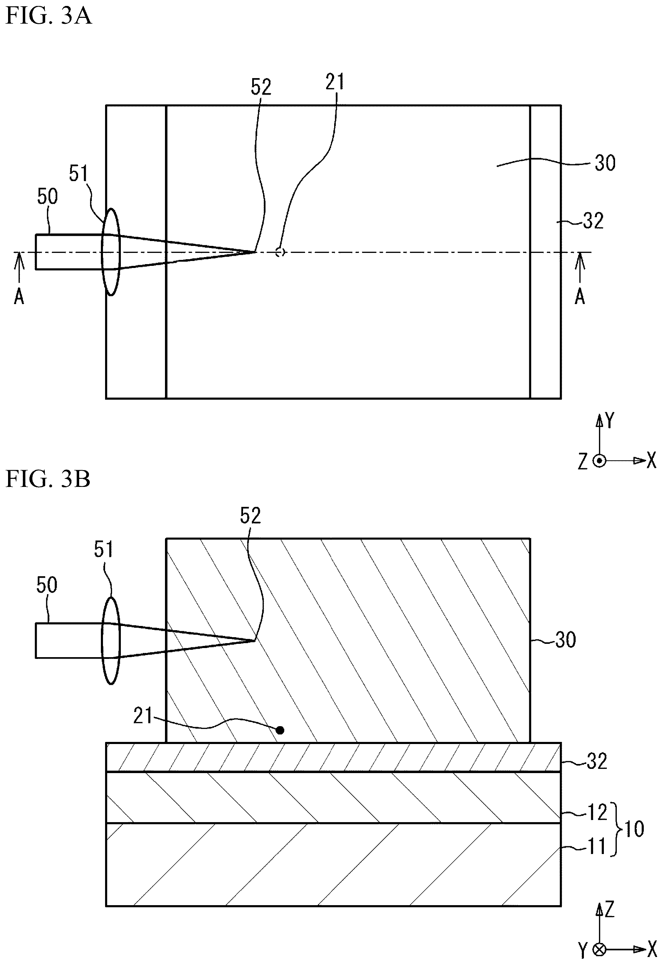

FIGs. 2A to 13B illustrate a method for manufacturing the quantum device 100 in accordance with the first embodiment. FIGs. 2A to 2C are cross-sectional views illustrating the method of manufacturing the quantum device 100 in accordance with the first embodiment. In FIGs. 3A to 13B, FIGs. 3A, 4A, 5A, 6A, 7A, 8A, 9A, 10A, 11A, 12A and 13A are plan views illustrating the method of manufacturing the quantum device 100 in accordance with the first embodiment, and FIGs. 3B, 4B, 5B, 6B, 7B, 8B, 9B, 10B, 11B, 12B and 13B are cross-sectional views taken along a line A-A in FIGs. 3A, 4A, 5A, 6A, 7A, 8A, 9A, 10A, 11A, 12A and 13A.

As illustrated in FIG. 2A, atoms such as tin (Sn) are ion-implanted into a surface 31 of a single-crystal diamond substrate 30, and then the diamond substrate 30 is annealed in a vacuum or an inert gas atmosphere. Thus, the color center 21 is formed on the diamond substrate 30. The color center 21 is, for example, the SnV center which is the complex defect of tin (Sn) substituted for carbon and the vacancy (V) adjacent to tin (Sn). As a method of ion implantation, for example, a focused ion beam method is used. The atoms to be ion-implanted may be other than tin (Sn), and may be, for example, nitrogen (N), silicon (Si), germanium (Ge), lead (Pb), or boron (B). The plurality of color centers 21 may be formed on the diamond substrate 30, and the color center 21 having a good optical emission characteristic may be selected from the plurality of color centers 21. A thickness T1 of the diamond substrate 30 is, for example, 400 µm to 500 µm, and a length L1 thereof is, for example, 4 mm to 5 mm. A depth D from the surface 31 of the diamond substrate 30 to the color center 21 can be controlled by an implantation energy in ion implantation, and is, for example, 30 nm to 100 nm.

As illustrated in FIG. 2B, after the sapphire substrate is bonded to the support substrate 10, the sapphire substrate is polished to a desired thickness to form the sapphire layer 32. The thickness T2 of the sapphire layer 32 is, for example, from 500nm to 1000nm. The support substrate 10 is, for example, the silicon substrate with the oxide film, and includes the silicon substrate 11 and the silicon oxide film 12 provided on the silicon substrate 11. The support substrate 10 and the sapphire substrate are bonded to each other by a direct bonding method such as a room-temperature bonding method using surface activation. For example, a chemical mechanical polishing (CMP) method is used for polishing the sapphire substrate.

As illustrated in FIG. 2C, the surface 31 of the diamond substrate 30 on which the color center 21 is formed is bonded to the sapphire layer 32. The diamond substrate 30 and the sapphire layer 32 are bonded to each other by the direct bonding method such as a room-temperature bonding method using surface activation.

As illustrated in FIGs. 3A and 3B, the diamond substrate 30 is cut by emitting a laser beam 50 onto a position of the diamond substrate 30 which is spaced apart from the surface of the sapphire layer 32 by, for example, about 10 µm. As a result, the diamond substrate 30 has a thickness of about 10 µm. For example, the diamond substrate 30 is cut by changing the position of the diamond substrate 30 with respect to a condensing lens 51 in the X-axis direction and the Y-axis direction and scanning a focal position 52 of the laser beam 50 in the X-axis direction and the Y-axis direction. As the laser beam 50, a nanosecond laser beam such as a YAG laser beam is used. After cutting the diamond substrate 30 with the laser beam 50, the cut surface may be planarized by using, for example, a CMP method.

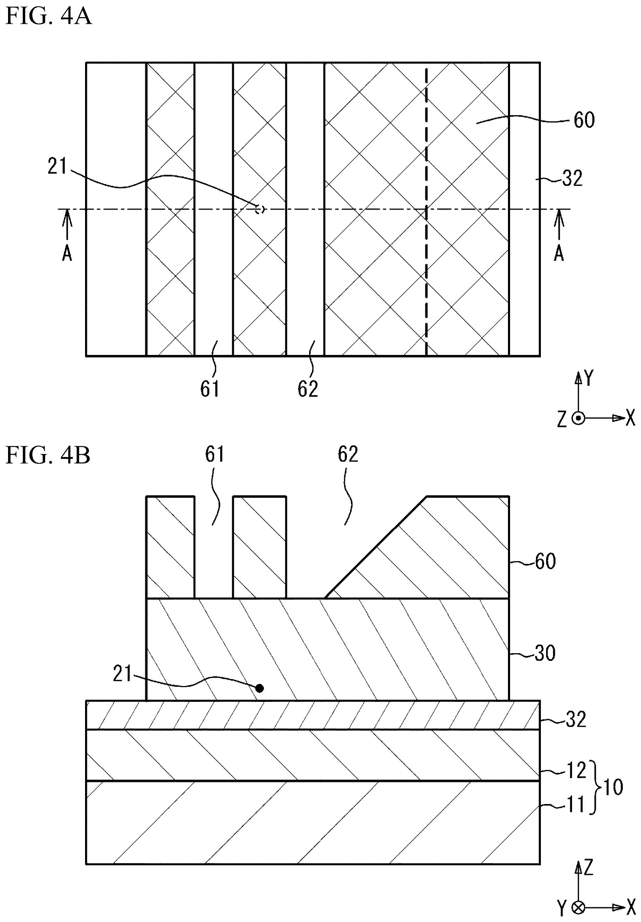

As illustrated in FIGs. 4A and 4B, a mask layer 60 made of a resist is formed on the diamond substrate 30. The mask layer 60 has a rectangular opening 61 and an opening 62 located away from the opening 61 in the X-axis direction. The side surface of the opening 62 near the opening 61 is a substantially vertical surface, and the side surface of the opening 62 opposite to the opening 61 is an inclined surface inclined by about 45 degrees, for example. The openings 61 and 62 extend in the Y-axis direction.

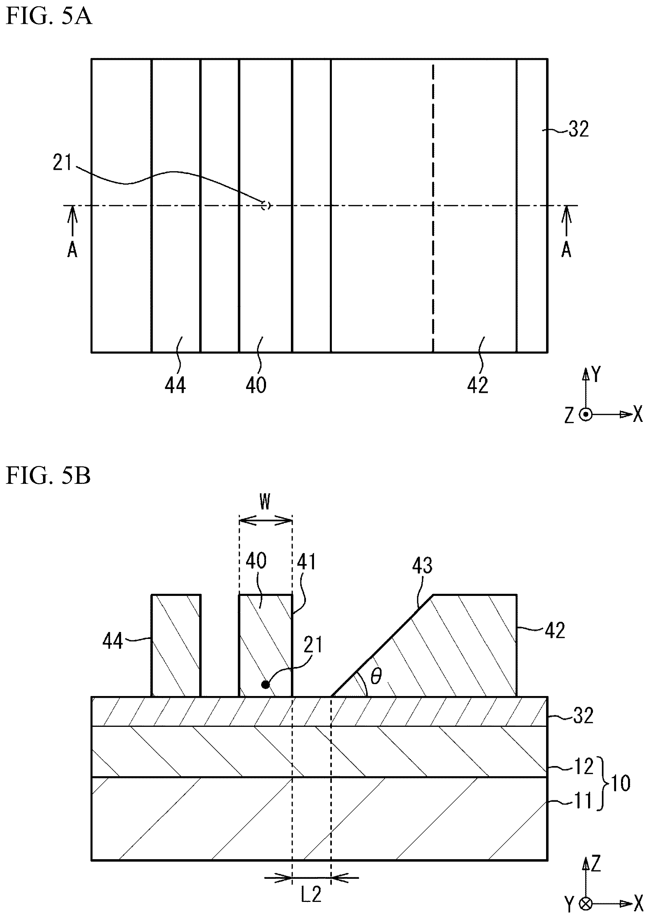

The diamond substrate 30 is etched using the mask layer 60 as a mask. For example, the diamond substrate 30 is etched by a reactive ion etching (RIE) method using an oxide gas (O₂ gas) as a reactive gas. Thereafter, the mask layer 60 is removed. As a result, as illustrated in FIGs. 5A and 5B, a first portion 40 including the color center 21 and having a side wall 41 substantially perpendicular to the upper surface of the sapphire layer 32 and a second portion 42 having an inclined surface 43 inclined with respect to the side wall 41 of the first portion 40 are formed. The first portion 40 and the second portion 42 are formed by the diamond substrate 30, and extend in the Y-axis direction side by side in the X-axis direction. A width W of the first portion 40 is, for example, from 200 nm to 500 nm. A shortest distance L2 between the first portion 40 and the second portion 42 in the X-axis direction is, for example, 2 µm to 3 µm. An inclination angle θ of the inclined surface 43 with respect to the upper surface of the sapphire layer 32 is, for example, 40 degrees or more and 50 degrees or less. Although a case where a third portion 44 made of the diamond substrate 30 is formed on the opposite side of the second portion 42 with the first portion 40 interposed therebetween is illustrated, the third portion 44 may not be formed.

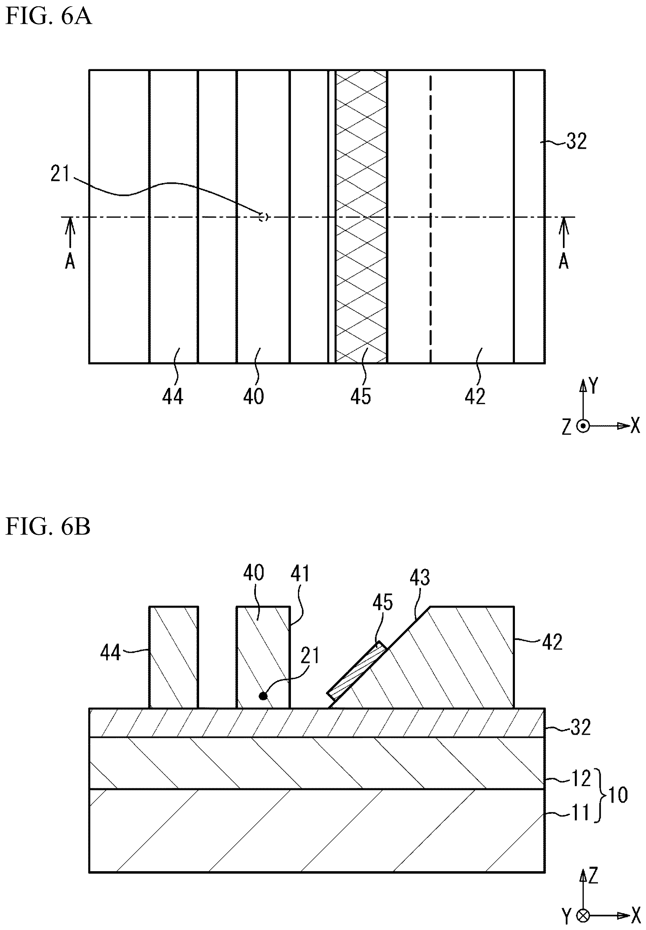

As illustrated in FIGs. 6A and 6B, a metal film 45 is formed on the inclined surface 43 of the second portion 42 by, for example, a vacuum deposition method and a lift-off method. The metal film 45 is formed on a part of the inclined surface 43 to extend in the Y-axis direction similarly to the second portion 42. The metal film 45 is, for example, a gold (Au) film or an aluminum (Al) film. The thickness of the metal film 45 is, for example, 30 nm to 100 nm. Note that a sputtering method may be used instead of the vacuum deposition method. An adhesion layer such as a titanium film or a chromium film may be provided between the metal film 45 and the inclined surface 43.

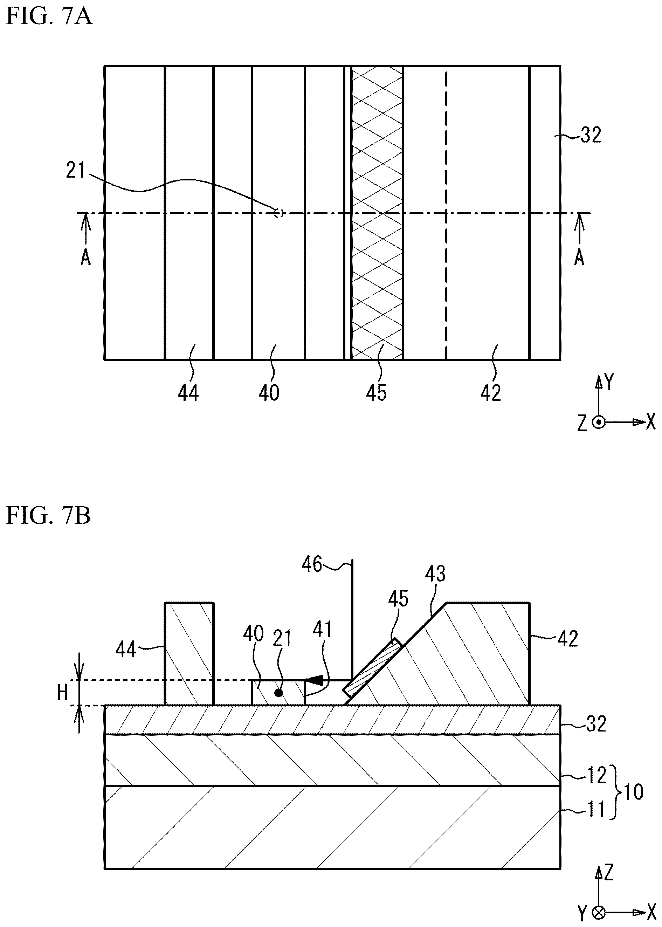

As illustrated in FIGs. 7A and 7B, the first portion 40 is cut by reflecting a laser beam 46 by the metal film 45 and emitting the laser beam 46 onto the side wall 41 of the first portion 40. The laser beam 46 is, for example, a femtosecond laser beam. For example, the first portion 40 is cut by changing the position of the support substrate 10 with respect to a condenser lens (not illustrated) in the Z-axis direction and the Y-axis direction and scanning the focal position of the laser beam 46 in the X-axis direction and the Y-axis direction. A height H of the first portion 40 after the first portion 40 is cut is, for example, 300 nm to 500 nm.

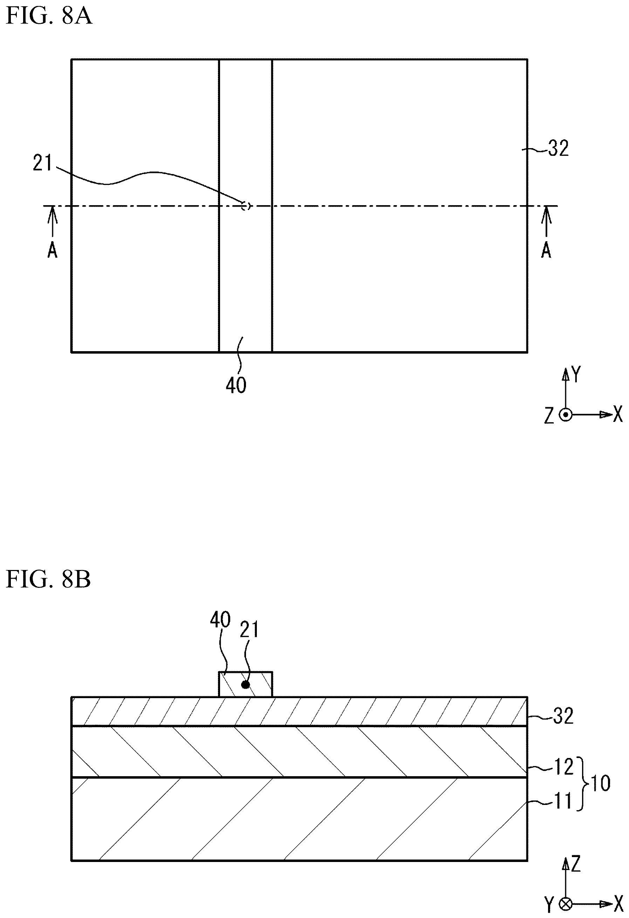

As illustrated in FIGs. 8A and 8B, the diamond substrate 30 other than the first portion 40 is removed. That is, the second portion 42 and the third portion 44 are removed. For example, the second portion 42 and the third portion 44 are removed by etching them by a reactive ion etching method using oxygen gas as a reactive gas.

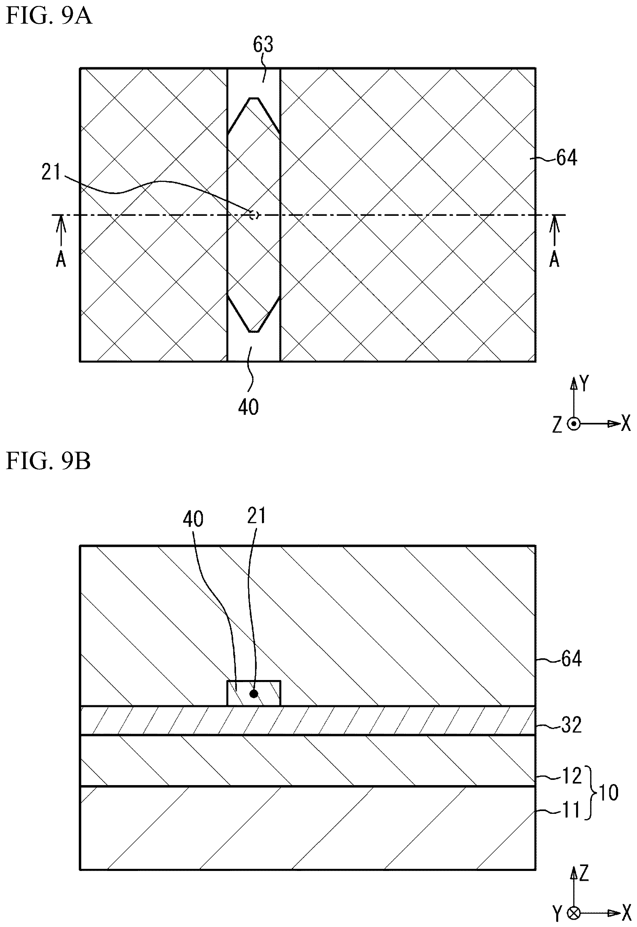

As illustrated in FIGs. 9A and 9B, a mask layer 64 is formed on the sapphire layer 32. The mask layer 64 covers a region of the first portion 40 where the first optical waveguide portion 20 is to be formed and has an opening 63 in a region other than the region where the first optical waveguide portion 20 is to be formed. The mask layer 64 is formed of, for example, a resist.

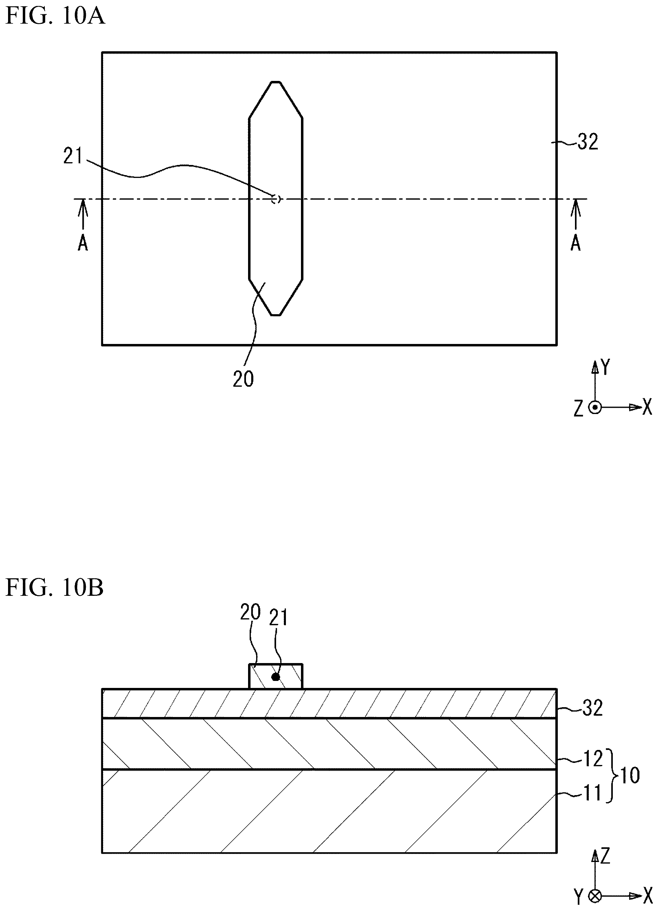

The first portion 40 is etched using the mask layer 64 as a mask. For example, the first portion 40 is etched by a reactive ion etching method using oxygen gas as a reactive gas. Thereafter, the mask layer 64 is removed. As a result, as illustrated in FIGs. 10A and 10B, the first optical waveguide portion 20 made of the diamond substrate 30 and including the color center 21 is formed.

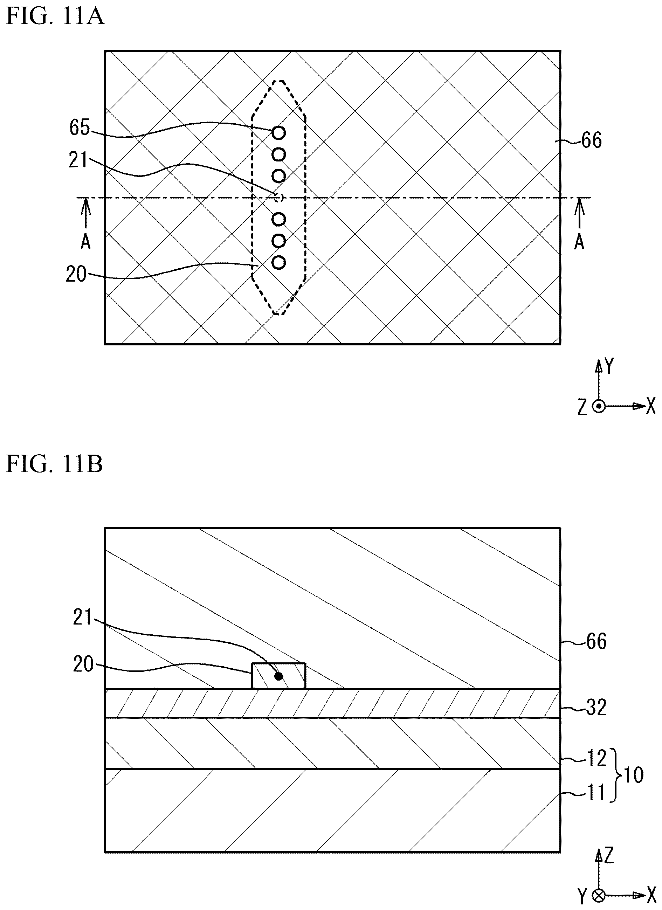

As illustrated in FIGs. 11A and 11B, a mask layer 66 having a plurality of openings 65 arranged in the Y-axis direction on the first optical waveguide portion 20 with the color centers 21 interposed therebetween is formed on the sapphire layer 32. The mask layer 66 is formed of, for example, a resist. The planar shape of the opening 65 is, for example, a circular shape, but may be an elliptical shape, a rectangular shape, or the like.

The first optical waveguide portion 20 is etched using the mask layer 66 as a mask.

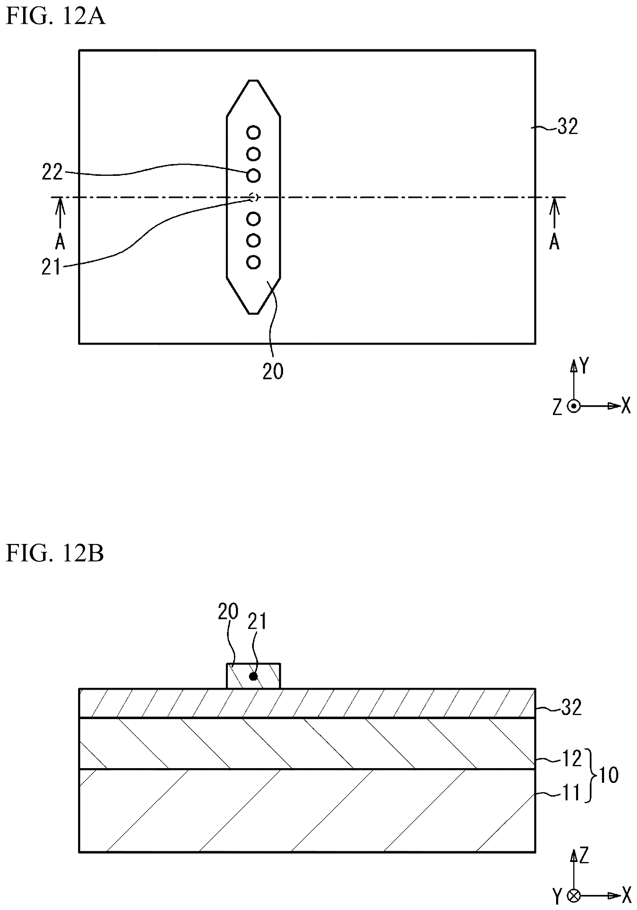

For example, the first optical waveguide portion 20 is etched by a reactive ion etching method using oxygen gas as a reactive gas. Thereafter, the mask layer 66 is removed. As a result, as illustrated in FIGs. 12A and 12B, the plurality of through holes 22 arranged in the Y-axis direction are formed in the first optical waveguide portion 20. The plurality of through holes 22 are formed side by side in the Y-axis direction with the color center 21 interposed therebetween in a plan view viewed from the +Z direction.

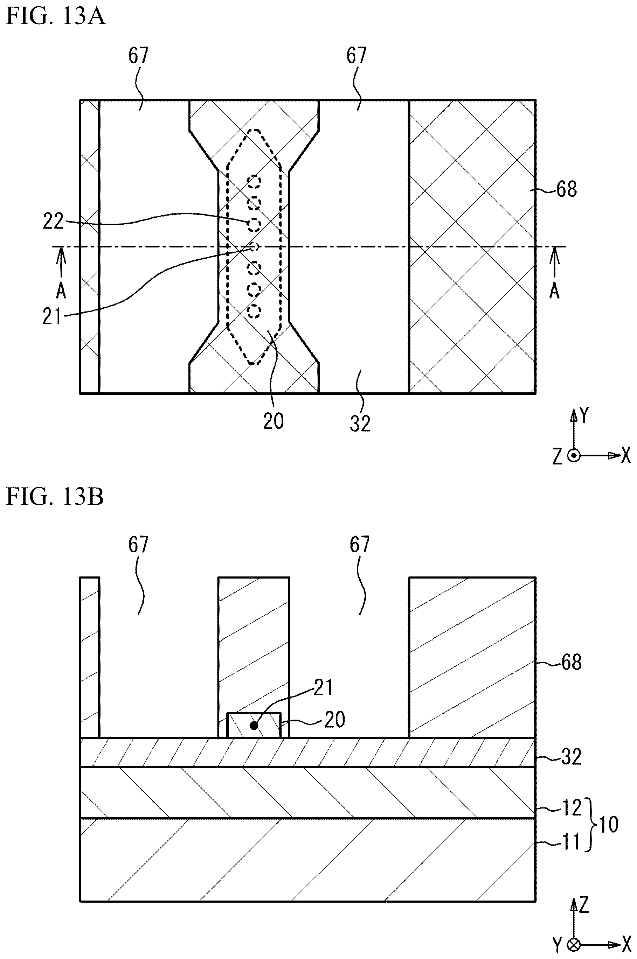

As illustrated in FIGs. 13A and 13B, a mask layer 68 is formed to cover a region where the second optical waveguide portion 24 is to be formed and to have openings 67 at positions adjacent to the region where the second optical waveguide portion 24 is to be formed. The mask layer 68 is formed of, for example, a resist. Then, the sapphire layer 32 is etched using the mask layer 68 as a mask. For example, the sapphire layer 32 is etched by a reactive ion etching method using a chlorine-based gas (such as a boron chloride (BCl₃) gas) as a reactive gas. Thereafter, the mask layer 68 is removed. As a result, as illustrated in FIGs. 1A and 1B, the second optical waveguide portion 24 made of the sapphire layer 32 and connected to the first optical waveguide portion 20 is formed. As described above, the quantum device 100 according to the first embodiment is formed.

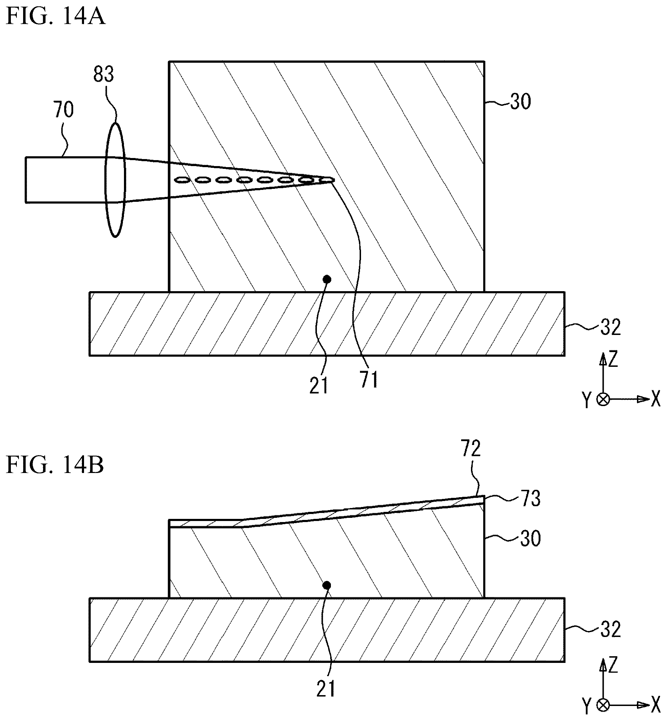

FIGs. 14A and 14B are cross-sectional views of the diamond substrate 30 in the case where the diamond substrate 30 is cut using a YAG laser beam 70. As illustrated in FIGs. 14A and 14B, when diamond substrate 30 is cut by scanning a focal position 71 formed by the YAG laser beam 70 passing through a condenser lens 83, a cut surface 72 is inclined and a damage layer 73 is formed on the cut surface 72 due to the influence of heat. Therefore, when the diamond substrate 30 is cut by using the YAG laser beam 70 so as to have the height of the first optical waveguide portion 20, the upper surface of the first optical waveguide portion 20 is inclined and the damage layer 73 is formed.

Since the damage layer 73 is formed, the YAG laser beam 70 is emitted onto the diamond substrate 30 at a position separated by about 10 µm to 100 µm from the sapphire layer 32 to cut the diamond substrate 30. Thereafter, the diamond substrate 30 may be polished by a CMP method or the like so as to have a desired thickness. However, in this case, since the polishing amount by the CMP method is large, a stress applied to the interface between the diamond substrate 30 and the sapphire layer 32 increases, and the diamond substrate 30 may be peeled off from the sapphire layer 32.

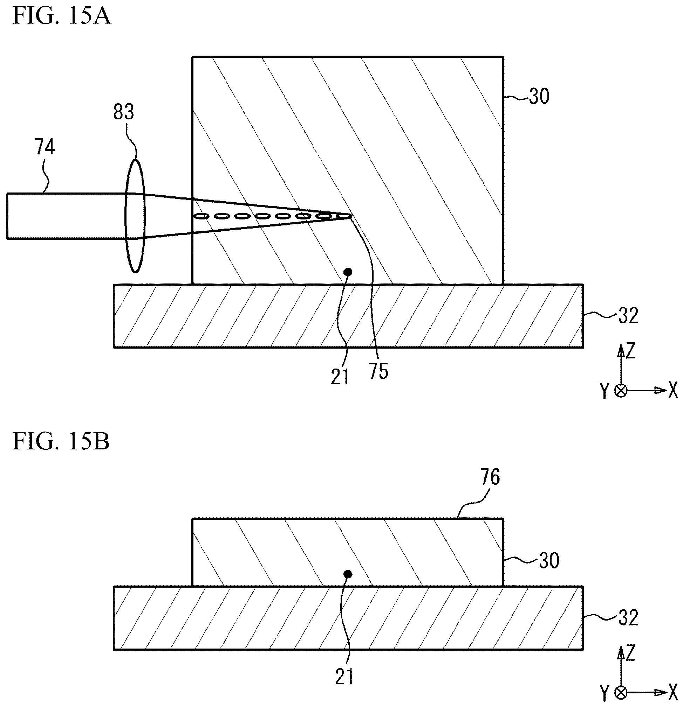

FIGs. 15A and 15B are cross-sectional views of the diamond substrate 30 in the case of cutting the diamond substrate 30 using a femtosecond laser beam 74. As illustrated in FIGs. 15A and 15B, when the diamond substrate 30 is cut by scanning a focal position 75 of the femtosecond laser beam 74, a cut surface 76 is substantially flat and no damage layer is formed on the cut surface 76. Therefore, the femtosecond laser beam 74 can be emitted onto the diamond substrate 30 near the color center 21.

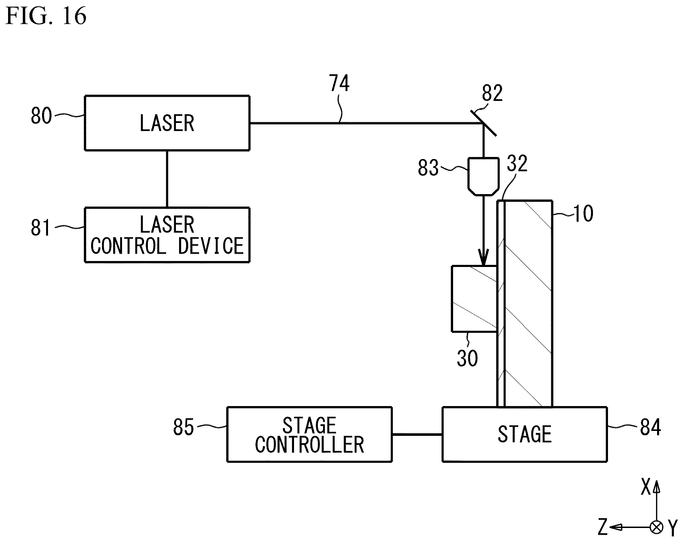

FIG. 16 is a diagram illustrating an example of a processing apparatus in the case of cutting the diamond substrate 30 using the femtosecond laser beam 74. As illustrated in FIG. 16, a laser 80 emits the femtosecond laser beam 74 based on an instruction from a laser control device 81. The femtosecond laser beam 74 is reflected by, for example, a mirror 82 and then enters the condenser lens 83. The femtosecond laser beam 74 is converted into a focused beam by the condenser lens 83 and is focused in the diamond substrate 30 (see also FIG. 15A).

The support substrate 10 to which the diamond substrate 30 is bonded is placed on a stage 84. The stage 84 moves in the X-axis direction, the Y-axis direction, and the Z-axis direction in accordance with an instruction from a stage controller 85. Accordingly, the stage 84 moves and the diamond substrate 30 moves in the X-axis and Y-axis directions, so that the focal position 75 (see FIG. 15A) of the femtosecond laser beam 74 is scanned in the X-axis and Y-axis directions, and the diamond substrate 30 is cut. However, when the stage 84 is moved in the X-axis direction to scan the femtosecond laser beam 74 in the X-axis direction, the support substrate 10 and the sapphire layer 32 may come into contact with the condenser lens 83. In order to avoid contact between the condenser lens 83, and the support substrate 10 and the sapphire layer 32, it is conceivable to use the condenser lens 83 having a long working distance. However, in order to flatten the cut surface 76 of the diamond substrate 30, the focal size of the femtosecond laser beam 74 is preferably small, and for this purpose, the condenser lens 83 preferably has a high magnification. However, since it is difficult to realize a condenser lens having a high magnification and a long working distance at present, it is difficult to form the first optical waveguide portion 20 having a desired shape.

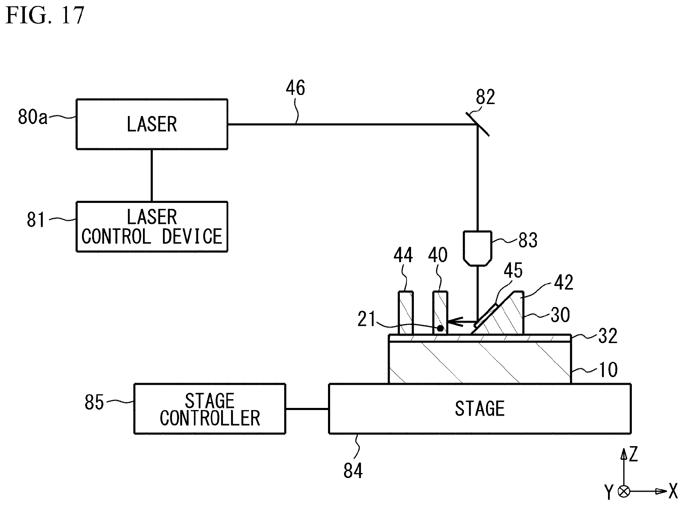

FIG. 17 is a diagram illustrating an example of a processing apparatus according to the first embodiment. As illustrated in FIG. 17, in the first embodiment, the laser beam 46 emitted from a laser 80a based on the instruction of the laser control device 81 is reflected by the mirror 82, passes through the condenser lens 83, is reflected by the metal film 45, and is then emitted onto the sidewall of the first portion 40. In this case, the stage 84 may be moved in the Z-axis direction in order to scan the focal position of the laser beam 46 in the X-axis direction. Therefore, even if the condenser lens 83 having the long working distance is not used, the condenser lens 83 is suppressed from coming into contact with the support substrate 10 and the diamond substrate 30. Therefore, the condenser lens 83 having the high magnification can be used, and the first optical waveguide portion 20 having the desired shape can be formed.

According to the first embodiment, as illustrated in FIG. 2C, the diamond substrate 30 including the color center 21 is bonded to the sapphire layer 32 provided on the support substrate 10. As illustrated in FIGs. 4A to 5B, the diamond substrate 30 is etched to form the first portion 40 including the color center 21 and the second portion 42 having the inclined surface 43 inclined with respect to the side wall 41 of the first portion 40. As illustrated in FIGs. 6A and 6B, the metal film 45 is formed on the inclined surface 43. As illustrated in FIGs. 7A and 7B, the laser beam 46 is reflected by the metal film 45 and is emitted onto the side wall 41 of the first portion 40, so that the first portion 40 is cut at a position farther from the sapphire layer 32 than the color center 21. As illustrated in FIGs. 9A to 10B, the first portion 40 is taken as the first optical waveguide portion 20. As illustrated in FIGs. 13A and 13B and FIGs. 1A and 1B, the sapphire layer 32 is etched to form the second optical waveguide portion 24 connected to the first optical waveguide portion 20. In this manner, by reflecting the laser beam 46 by the metal film 45 to cut the first portion 40, the laser beam 46 can be condensed using the condenser lens with the high magnification as described in FIG. 17. Therefore, the first portion 40 can be cut by reducing the focal size of the laser beam 46, and the first optical waveguide portion 20 having the desired shape can be formed.

In the first embodiment, as illustrated in FIGs. 3A and 3B, before the first portion 40 and the second portion 42 are formed, the diamond substrate 30 is cut at a position farther from the sapphire layer 32 than the position at which the first portion 40 is cut in FIGs. 7A and 7B. This reduces the amount of etching when the diamond substrate 30 is etched to form the first portion 40 and the second portion 42 in FIGs. 4A to 5B, and thus the first portion 40 can be formed in a desired shape. Therefore, the first optical waveguide portion 20 can be formed into a desired shape.

In the first embodiment, in FIGs. 7A and 7B, the femtosecond laser beam is used as the laser beam 46 for cutting the first portion 40. This improves the flatness of the first portion 40, and thus the first optical waveguide portion 20 can be formed in the desired shape.

In addition, in the first embodiment, as illustrated in FIGs. 4A to 5B, the first portion 40 is formed by etching the diamond substrate 30 on both sides of the color center 21. This reduces the amount of cutting when the first portion 40 is cut in FIGs. 7A and 7B, and thus the first portion 40 can be formed into the desired shape. Therefore, the first optical waveguide portion 20 can be formed into the desired shape.

In the first embodiment, as illustrated in FIGs. 3A and 3B, the diamond substrate 30 is cut by emitting the laser beam 50 onto the diamond substrate 30. This can suppress the diamond substrate 30 from being peeled off from the sapphire layer 32 when the diamond substrate 30 is thinned.

In the first embodiment, as illustrated in FIG. 5B, an inclination angle θ of the inclined surface 43 with respect to the upper surface of the sapphire layer 32 is 40 degrees or more and 50 degrees or less. This makes it easier to form the upper surface of the first portion 40 parallel to the upper surface of the sapphire layer 32 when the first portion 40 is cut by reflecting the laser beam 46 by the metal film 45 in FIGs. 7A and 7B. Therefore, the first optical waveguide portion 20 can be formed into the desired shape.

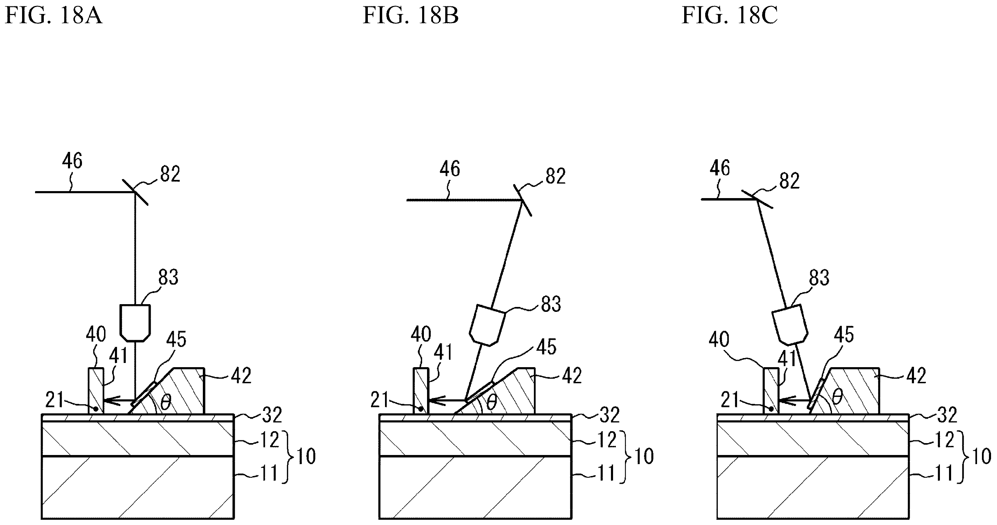

Here, emitting the laser beam 46 onto the metal film 45 in a case where the inclination angle θ is 45 degrees, a case where the inclination angle θ is smaller than 45 degrees, and a case where the inclination angle θ is larger than 45 degrees will be described. FIGs. 18A to 18C are cross-sectional views illustrating emission of the laser beam 46 onto the metal film 45 in the first embodiment. FIG. 18A illustrates the case where the inclination angle θ is 45 degrees, FIG. 18B illustrates the case where the inclination angle θ is smaller than 45 degrees, and FIG. 18C illustrates a case where the inclination angle θ is larger than 45 degrees.

As illustrated in FIG. 18A, when the inclination angle θ is 45 degrees, the mirror 82 and the condenser lens 83 are arranged in the normal direction of the upper surface of the sapphire layer 32, and the laser beam 46 enters the metal film 45 from a direction perpendicular to the upper surface of the sapphire layer 32. Accordingly, the laser beam 46 can be emitted onto the side wall 41 of the first portion 40 from a direction perpendicular to the side wall 41. Therefore, the upper surface of the first portion 40 is formed parallel to the upper surface of the sapphire layer 32.

As illustrated in FIGs. 18B and 18C, when the inclination angle θ is smaller than 45 degrees and when the inclination angle θ is larger than 45 degrees, the mirror 82 and the condenser lens 83 are arranged in a direction appropriately inclined with respect to the normal direction of the upper surface of the sapphire layer 32. Thus, the laser beam 46 can be emitted onto the side wall 41 of the first portion 40 from a direction perpendicular to the side wall 41, and the upper surface of the first portion 40 is formed parallel to the upper surface of the sapphire layer 32.

In the first embodiment, as illustrated in FIGs. 11A to 12B, the first optical waveguide portion 20 is etched to form the plurality of through holes 22 arranged in the Y-axis direction with the color center 21 interposed therebetween. As a result, the first optical waveguide portion 20, which is a photonic crystal optical waveguide portion whose refractive index repeatedly changes in the Y-axis direction, is obtained.

In the first embodiment, the support substrate 10 is a silicon substrate with an oxide film, and the layer provided on the support substrate 10 is the sapphire layer 32. However, the present disclosure is not limited to this case. The support substrate 10 may be a substrate other than the silicon substrate with the oxide film as long as the optical pulse and the photon pulse can be transmitted through the second optical waveguide portion 24, and may be, for example, a silicon oxide substrate. Similarly, the layer provided on the support substrate 10 may be a layer other than the sapphire layer 32 as long as the layer can transmit the optical pulse and the photon pulse, and may be, for example, a silicon nitride layer, a silicon carbide layer, or a silicon oxide layer.

### [Modifications]

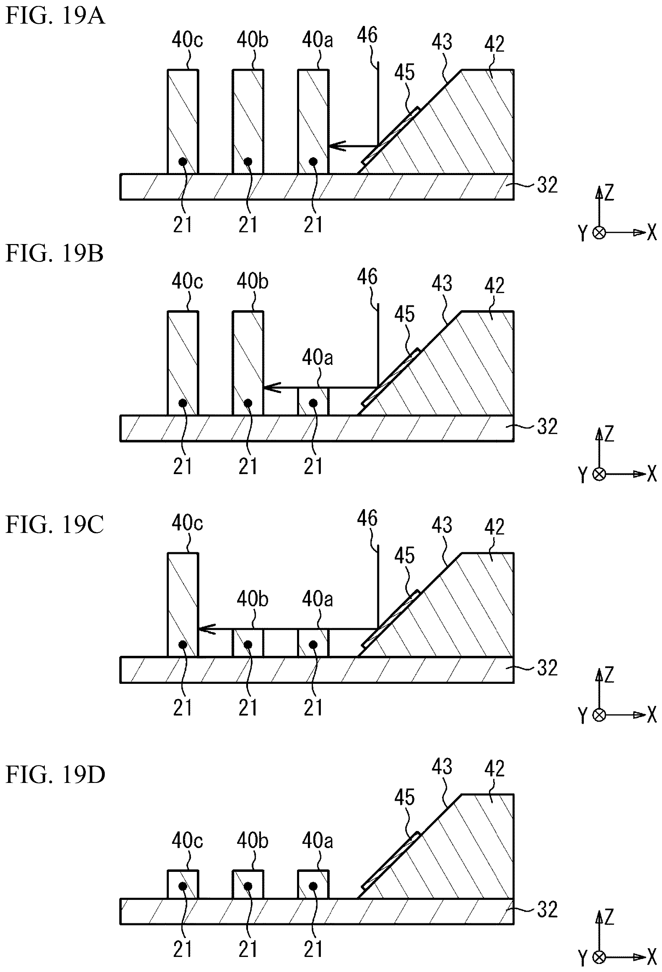

FIGs. 19A to 19D are cross-sectional views illustrating cutting of first portions 40a to 40c in a first variation of the first embodiment. As illustrated in FIG. 19A, in the first variation of the first embodiment, the plurality of first portions 40a to 40c are provided side by side in the X-axis direction. The laser beam 46 reflected by the metal film 45 is first emitted onto the first portion 40a adjacent to the second portion 42. Therefore, as illustrated in FIG. 19B, the first portion 40a is first cut by the laser beam 46.

After the first portion 40a is cut, the laser beam 46 is emitted onto the first portion 40b. Therefore, as illustrated in FIG. 19C, the first portion 40b is cut by the laser beam 46. After the first portion 40b is cut, the laser beam 46 is emitted onto the first portion 40c. Therefore, as illustrated in FIG. 19D, the first portion 40c is cut by the laser beam 46.

As in the first variation of the first embodiment, the plurality of first portions 40a to 40c may be formed side by side in order from the inclined surface 43 of the second portion 42. Then, the laser beam 46 may be reflected by the metal film 45 and sequentially emitted to the plurality of first portions 40a to 40c to sequentially cut the plurality of first portions 40a to 40c. This makes it possible to easily form the first optical waveguide portion 20 integrated at high density.

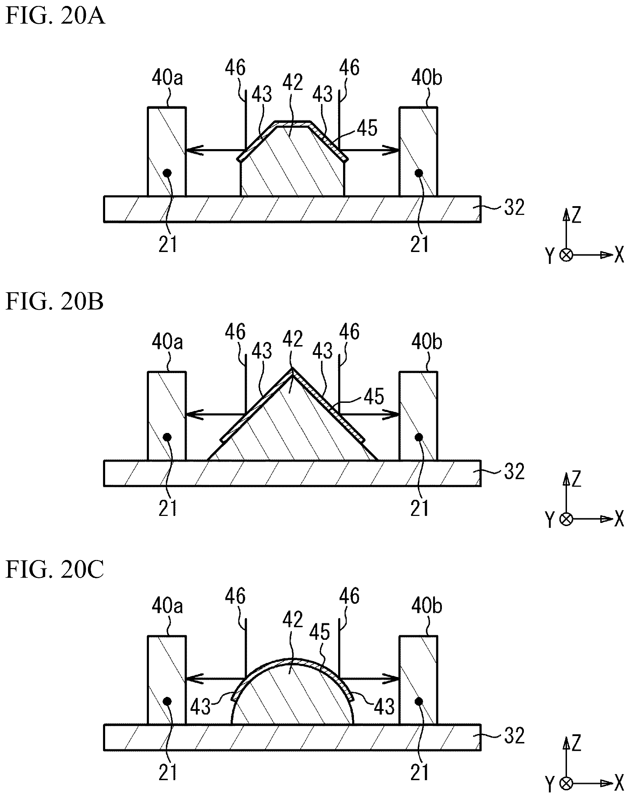

FIGs. 20A to 20C are cross-sectional views illustrating the first portions 40a and 40b, and the second portion 42 in a second variation of the first embodiment. As illustrated in FIGs. 20A to 20C, the second portion 42 may have both side surfaces in the X-axis direction as the inclined surfaces 43, and the metal films 45 may be provided on the respective inclined surfaces 43. The metal films 45 provided on the respective inclined surfaces 43 may be connected to each other or may be separated from each other. The inclined surface 43 may be a flat surface as illustrated in FIGs. 20A and 20B, or may be a curved surface as illustrated in FIG. 20C.

The plurality of first portions 40a and 40b may be provided so as to interpose the second portion 42 therebetween in the X-axis direction. The first portions 40a and 40b may be cut by reflecting the laser beams 46 by the metal film 45 of the respective inclined surfaces 43 of the second portion 42 and emitting the laser beams 46 onto the first portions 40a and 40b.

As in the second variation of the first embodiment, the plurality of first portions 40a and 40b interposing the second portion 42 therebetween in the X-axis direction and the second portion 42 having the inclined surfaces 43 on both sides in the X-axis direction may be formed. Then, the first portions 40a and 40b may be cut by reflecting the laser beams 46 by the metal film 45 provided on the inclined surfaces 43 on both sides of of the second portion 42 and emitting the laser beams 46 onto the first portions 40a and 40b interposing the second portion 42 therebetween. Accordingly, the number of the second portions 42 can be reduced, that is, the formation region of the second portion 42 can be reduced, and thus the quantum device can be reduced in size.

The inclined surfaces 43 of the second portion 42 may be the flat surface as illustrated in FIGs. 20A and 20B, or may be the curved surface as illustrated in FIG. 20C. When the inclined surfaces 43 are the flat surfaces, the laser beams 46 are easily emitted onto desired positions of the first portion 40a and the 40b portion when the laser beams 46 are reflected by the metal film 45.

### [Second Embodiment]

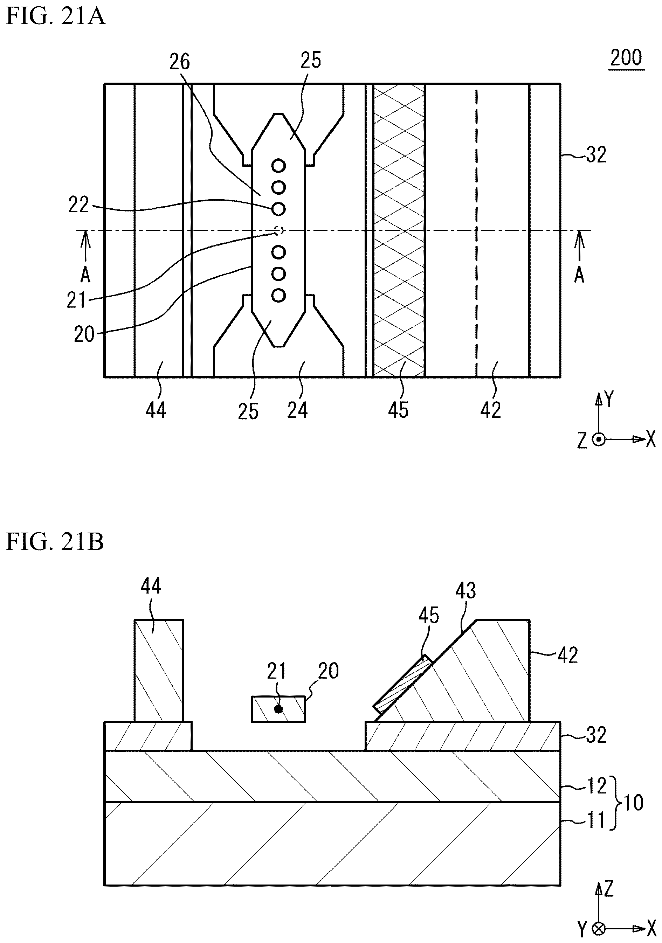

FIG. 21A is a plan view of a quantum device 200 in accordance with a second embodiment, and FIG. 21B is a cross-sectional view taken along a line A-A in FIG. 21A. As illustrated in FIGs. 21A and 21B, in the quantum device 200, the second optical waveguide portion 24 is removed below the central portion 26 of the first optical waveguide portion 20. That is, the second optical waveguide portion 24 is divided below the central portion 26 of the first optical waveguide portion 20. The second portion 42 and the third portion 44 made of the diamond substrate 30 remain on the sapphire layer 32. The other configurations of the second embodiment are the same as those of the first embodiment, and thus the description thereof will be omitted.

### [Manufacturing Method]

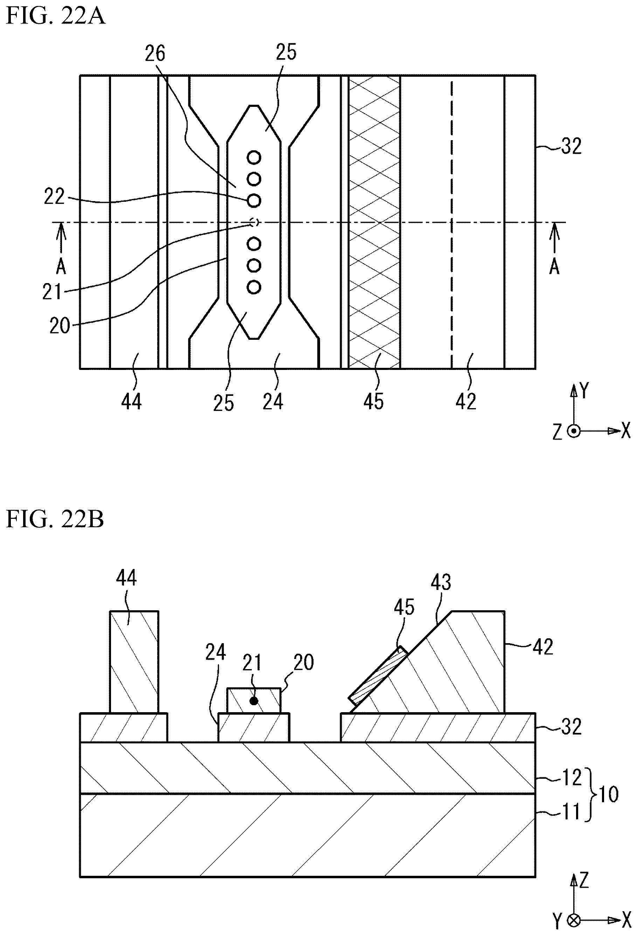

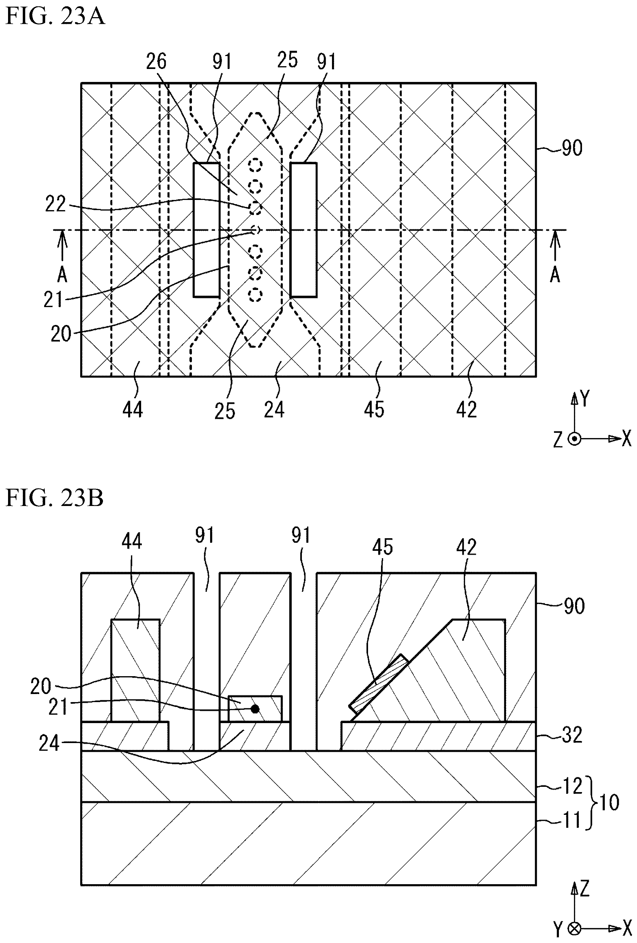

FIGs. 22A to 23B are cross-sectional views illustrating a method of manufacturing the quantum device 200 in accordance with the second embodiment. FIGs. 22A and 23A are plan views illustrating a method for manufacturing the quantum device 200 in accordance with the second embodiment, and FIGs. 22B and 23B are cross-sectional views taken along a line A-A in FIGs. 22A and 23A. First, the same steps as those of the first embodiment illustrated in FIGs. 2A to 7B are performed. Thereafter, the same steps as those of FIGs. 9A to 13B of the first embodiment are performed while the second portion 42 and the third portion 44 made of the diamond substrate 30 are remained. As a result, the first optical waveguide portion 20 and the second optical waveguide portion 24 are formed as illustrated in FIGs. 22A and 22B.

As illustrated in FIGs. 23A and 23B, a mask layer 90 having openings 91 through which the side surfaces of the second optical waveguide portion 24 at positions overlapping the central portion 26 of the first optical waveguide portion 20 are exposed is formed on the support substrate 10. The mask layer 90 is formed of, for example, a resist. Next, the second optical waveguide portion 24 at a position overlapping the central portion 26 of the first optical waveguide portion 20 is removed by etching using the mask layer 90 as a mask. For example, the second optical waveguide portion 24 at the position overlapping the central portion 26 of the first optical waveguide portion 20 is etched by using a chlorine-based gas as a reactive gas and using a reactive ion etching method with a small bias voltage. Thereafter, the mask layer 90 is removed. As a result, as illustrated in FIGs. 21A and 21B, the second optical waveguide portion 24 is divided below the central portion 26 of the first optical waveguide portion 20. As described above, the quantum device 200 according to the second embodiment is formed.

According to the second embodiment, as illustrated in FIGs. 23A and 23B, the mask layer 90 is formed to cover the first optical waveguide portion 20 and to have the openings 91 exposing the portion of the second optical waveguide portion 24 overlapping the first optical waveguide portion 20. Then, as illustrated in FIGs. 21A and 21B, a portion of the second optical waveguide portion 24 overlapping the first optical waveguide portion 20 is removed using the mask layer 90. Accordingly, the second optical waveguide portion 24 is divided below the central portion 26 of the first optical waveguide portion 20, and thus the optical pulse transmitted through the second optical waveguide portion 24 can efficiently enter the color center 21.

Although the embodiment of the present invention is described in detail, the present invention is not limited to the specifically described embodiments and variations but other embodiments and variations may be made without departing from the scope of the claimed invention.

## Claims

1. A method of manufacturing a quantum device (100, 200), comprising:
bonding a diamond substrate (30) including a color center (21) to a layer (32) provided on a support substrate (10);
forming a first portion (40) including the color center, and a second portion (42) having an inclined surface (43) inclined with respect to a side wall (41) of the first portion by etching the diamond substrate after the bonding the diamond substrate;
forming a metal film (45) on the inclined surface; and
forming a first optical waveguide portion (20) by cutting the first portion at a first position farther from the layer than the color center by emitting a laser beam reflected by the metal film onto the side wall of the first portion.

2. The method of manufacturing the quantum device according to claim 1, further comprising forming a second optical waveguide portion (24) connected to the first optical waveguide portion by etching the layer.

3. The method of manufacturing the quantum device according to claim 2, further comprising:
forming a mask layer (90) covering the first optical waveguide portion and having an opening (91) that exposes a portion of the second optical waveguide portion overlapping the first optical waveguide portion; and
removing the portion of the second optical waveguide portion overlapping the first optical waveguide portion using the mask layer.

4. The method of manufacturing the quantum device according to any preceding claim, further comprising, before forming the first portion and the second portion, cutting the diamond substrate at a second position farther from the layer than the first position.

5. The method of manufacturing the quantum device according to any preceding claim,
wherein the laser beam is a femtosecond laser beam.

6. The method of manufacturing the quantum device according to any preceding claim,
wherein forming the first portion includes forming the first portion by etching the diamond substrate on both sides of the color center.

7. The method of manufacturing the quantum device according to claim 4,
wherein cutting the diamond substrate includes cutting the diamond substrate by emitting the laser beam onto the diamond substrate at the second position.

8. The method of manufacturing the quantum device according to any preceding claim, further comprising etching the first optical waveguide portion to form a plurality of through holes (22) arranged in one direction with the color center interposed therebetween.

9. The method of manufacturing the quantum device according to any preceding claim,
wherein an inclination angle of the inclined surface with respect to an upper surface of the layer is 40 degrees or more and 50 degrees or less.

10. The method of manufacturing the quantum device according to any preceding claim,
wherein forming the first portion includes forming a plurality of first portions arranged sequentially from the inclined surface of the second portion, and
cutting the first portion includes sequentially cutting the plurality of first portions by reflecting the laser beam on the metal film and sequentially emitting the laser beam onto side walls of the plurality of first portions.

11. The method of manufacturing the quantum device according to any preceding claim,
wherein forming the first portion and the second portion includes forming a plurality of first portions interposing the second portion therebetween from one direction and the second portion having inclined surfaces on both sides in the one direction, and
cutting the first portion includes cutting the plurality of first portions by reflecting laser beams on metal films provided on the inclined surfaces on both sides of the second portion, respectively, and emitting the laser beams onto the plurality of first portions interposing the second portion therebetween.

12. The method of manufacturing the quantum device according to any preceding claim,
wherein the inclined surface is a flat surface or a curved surface.

13. The method of manufacturing the quantum device according to any preceding claim,
wherein the support substrate is a silicon substrate with an oxide film or a silicon oxide substrate, and
the layer is a sapphire layer, a silicon nitride layer, a silicon carbide layer, or a silicon oxide layer.
